# EUROPÄISCHE PATENTANMELDUNG

(11) **EP 4 086 661 A1**
(43) Veröffentlichungstag der Anmeldung: **09.11.2022**
(21) Anmeldenummer: 21172103.0
(22) Anmeldetag: 04.05.2021
(51) Int. Cl.: G01S 7/497, G01S 17/42, G01S 17/89, G01S 7/481

(54) **OPTOELEKTRONISCHER SENSOR UND VERFAHREN ZUR ÜBERWACHUNG EINER FRONTSCHEIBE**

(71) Anmelder: SICK AG, 79183 Waldkirch (DE)
(72) Erfinder: Jachmann, Fabian, 79102 Freiburg (DE)

(57) **Zusammenfassung**

Es wird ein optoelektronischer Sensor (10) angegeben, der einen Lichtsender (12), eine bewegliche Ablenkeinheit (26), einen Lichtempfänger (24), eine Frontscheibe (40), einen mit der Ablenkeinheit mitbewegten Testlichtsender (48) und Testlichtempfänger (50) und eine Steuer- und Auswertungseinheit (34) aufweist, die dafür ausgebildet ist, Informationen über die Objekte in dem Überwachungsbereich (18) zu gewinnen sowie in einer Frontscheibenüberwachungsmessung eine beeinträchtigte Lichtdurchlässigkeit der Frontscheibe (40) aus einem Testlichtsignal des Testlichtempfänger zu erkennen sowie eine Referenzmessung des Testlichtsignals in mindestens einer Referenzstellung der Ablenkeinheit (26) durchzuführen.

## Beschreibung

Die Erfindung betrifft einen optoelektronischen Sensor mit einer Frontscheibe und ein Verfahren zur Überwachung einer Frontscheibe nach dem Oberbegriff von Anspruch 1 beziehungsweise 15.

Für optische Überwachungen werden häufig Laserscanner eingesetzt. Darin überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie in der Sicherheitstechnik bevorzugt eingesetzt werden, misst der Laserscanner die Laufzeit, bis ein ausgesandter Lichtpuls wieder empfangen wird. In einem beispielsweise aus der EP 2 469 296 B1 bekannten Pulsmittelungsverfahren wird für eine Messung eine Vielzahl von Einzelpulsen ausgesandt, und die Empfangspulse werden statistisch ausgewertet.

Eine wichtige Anwendung ist die Absicherung einer Gefahrenquelle in der Sicherheitstechnik. Der Laserscanner überwacht dabei ein Schutzfeld, das während des Betriebs der Maschine von Bedienpersonal nicht betreten werden darf. Da der Laserscanner Winkel- und Entfernungsinformationen gewinnt, können zweidimensionale Positionen von Objekten in dem Überwachungsbereich und damit auch in dem Schutzfeld ermittelt werden. Erkennt der Laserscanner einen unzulässigen Schutzfeldeingriff, etwa ein Bein einer Bedienperson, so löst er einen Nothalt der Maschine aus.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung und/oder Vorsehen von einzelnen Testzielen mit definierten Reflexionsgraden, die unter den entsprechenden Scanwinkeln erkannt werden müssen.

Eine weitere dieser Sicherheitsanforderung ist die Erkennung einer Beeinträchtigung der Transmission einer Frontscheibe des Laserscanners, auf die bei Einschränkung der Detektionsfähigkeit mit einer sicherheitsgerichteten Abschaltung reagiert werden muss. Dabei ist sowohl eine homogene Verschmutzung, etwa durch Staub, als auch eine punktuelle Beeinträchtigung durch kleine Störobjekte ab einer festgelegten Mindestgröße aufzudecken. Ebenfalls auszuschließen ist eine bewusste Manipulation durch Abdeckung von Frontscheibenbereichen mit kleinen Abschattungsobjekten.

Zur Aufdeckung solcher Störeinflüsse verwendet ein Laserscanner üblicherweise optische Testkanäle, die verschiedene Positionen des Frontscheibenbereichs mittels Durchstrahlung prüfen. In einer beispielsweise aus der DE 43 45 446 C2 bekannten Lösung werden über den gesamten Winkelbereich der Frontscheibe eine Vielzahl unabhängiger optischer Testkanäle verteilt, die entsprechend unterschiedliche Bereiche der Frontscheibe testweise durchstrahlen und dadurch eine beeinträchtigte Transmission erkennen. Die Verteilung der Testkanäle muss dicht genug sein, um trotz nur punktueller Detektion die von der Norm geforderten kleinen Verschmutzungs- oder Manipulationsobjekte überall sicher zu detektieren. Eine große Zahl von Testkanälen erhöht natürlich die Herstellkosten und den benötigten Bauraum. Außerdem liegen die Testkanäle recht nahe an der Außenkontur des Laserscanners, um der drehenden Ablenkeinheit auszuweichen. Damit werden sie anfällig für Störungen durch Fremdlicht und zufällig oder zur Manipulation in der Nähe befindliche Reflektoren.

Die EP 2 237 065 A1 offenbart einen Laserscanner, bei dem sich die komplette Messeinheit mit Lichtquelle und Detektor dreht. Auf dem entsprechenden Rotor sind außerdem eine Testlichtquelle und ein Testdetektor untergebracht, während außerhalb des Gehäuses ein Reflektorelement angeordnet ist. So tasten Testlichtquelle und Testdetektor die Frontscheibe im Laufe der Umdrehung mit Hilfe des Reflektorelements ab.

Einen Laserscanner mit rotierendem Messkopf stellt auch die EP 2 388 619 A1. In dem Messkopf ist ein zusätzliches Sensorelement vorgesehen. Dessen emittierte Lichtstrahlen durchsetzen das Fenster und treffen außerhalb auf einen Reflektor in Form einer Reflektorleiste, die in Umfangsrichtung an der Außenseite des Gehäuses umläuft. Die rückreflektierten Lichtstrahlen durchsetzen nochmals das Fenster und werden dann wieder von dem Sensorelement registriert, um anhand verstärkter Abschwächungen der Lichtstrahlen lokale Verschmutzungen des Fensters zu detektieren.

Der jeweils außen angebrachte Reflektor kann aber seinerseits verschmutzen und so trotz sauberer Frontscheibe das Testsignal dämpfen. Weiterhin haben Testdetektor beziehungsweise Sensorelement eine Blickrichtung nach außen und sind damit empfindlich gegenüber Fremdlichtquellen. Es sind jeweils keinerlei Maßnahmen vorgesehen, um die Funktionsfähigkeit der Verschmutzungsmessung selbst zu gewährleisten.

Die EP 3 078 985 B1 verwendet eine Vielzahl von Testlichtsendern und Testlichtempfängern, die auf einen mit dem Drehspiegel rotierenden Reflektor gerichtet sind. In der EP 2 508 914 A1 wird in einem ähnlichen Aufbau ein Retroreflektor an einem mitrotierenden Sendetubus angeordnet. Die US 2008/0158555 A1 zeigt ein vergleichbares Prinzip mit etwas anderem konstruktivem Aufbau. Ein mitrotierender Reflektor reduziert die Anzahl benötigter Testpfade im Vergleich zu dem herkömmlichen Ansatz um die Frontscheibe verteilter starrer Testpfade. Trotzdem ist das ein Rückschritt gegenüber einer mitrotierenden Verschmutzungsmessung wie in EP 2 237 065 A1 oder EP 2 388 619 A1, der bereits ein einziges Pärchen von Testlichtsender und Testlichtempfänger genügt.

In der DE 197 06 612 A1 werden in einer optoelektronischen Vorrichtung Testlichtsendestrahlen von einem starr auf der Drehachse sitzenden Sendeelement über mit dem Drehspiegel rotierende Umlenkmittel nach außen geführt. Dort werden sie erneut umgelenkt, um ein Austrittsfenster der optoelektronischen Vorrichtung zu durchsetzen. Auf der gegenüberliegenden Seite werden die Testsendelichtstrahlen von einem weiteren Spiegel auf den Rückweg geschickt und dann von einem bei dem Sendeelement angeordneten Empfangselement detektiert. Die EP 3 511 739 A1 prüft mit diesem Prinzip eine Frontscheibe mit anderer Kontur. Die vielfache Lichtumlenkung ist im Vergleich zu einer mitrotierenden Verschmutzungsmessung recht aufwändig und beansprucht Bauraum für die sich über den Umfang erstreckenden Umlenkelemente und die Testlichtpfade. Die DE 100 25 511 C1 verfolgt eine Variante, in der am Ende des Testlichtpfades kein Reflektor, sondern das zugehörige Empfangselement sitzt. Damit kommt noch der weitere Nachteil hinzu, dass mehrere über den Umfang verteilte Empfangselemente erforderlich sind.

Die EP 2 447 733 A1 offenbart einen Laserscanner mit einer kelchförmig als Freiform ausgeführten Frontscheibe. In der EP 2 642 314 A1 wird eine Verschmutzungsmessung für diese spezielle Frontscheibengeometrie beschrieben. Dies basiert jedoch auf starren und nicht mitbewegten Testlichtsendern und Testlichtempfängern. Dabei gelingt es, durch Ausnutzen der Frontscheibengeometrie mehrere Testlichtpfade auf denselben Testlichtempfänger zu führen. Es bleibt jedoch eine Vielzahl um den Umfang verteilter Testlichtsender erforderlich.

Es ist daher Aufgabe der Erfindung, die Transmissionsprüfung oder Verschmutzungsmessung weiter zu verbessern.

Diese Aufgabe wird durch einen optoelektronischen Sensor und ein Verfahren zur Überwachung einer Frontscheibe nach Anspruch 1 beziehungsweise 15 gelöst. Ein Lichtsender sendet mindestens ein Lichtbündel in einen Überwachungsbereich aus, vorzugsweise einen insbesondere kollimierten Lichtstrahl mit kleinem Querschnitt. Mit Hilfe einer beweglichen Ablenkeinheit wird das ausgesandte Lichtbündel periodisch durch den Überwachungsbereich geführt. Ein Lichtempfänger erzeugt aus dem reflektierten Lichtbündel beziehungsweise Lichtstrahl ein Empfangssignal. Dabei wird hier zwischen gerichteter Reflexion und ungerichteter Streuung oder Remission begrifflich nicht unterschieden. So wird mit der Bewegung der Ablenkeinheit wiederholt eine Ebene in dem Überwachungsbereich abgetastet. In einigen Ausführungsformen erzeugt der Lichtsender mehrere voneinander beabstandete Lichtstrahlen, und der Lichtempfänger ist entsprechend für den Empfang mehrerer Lichtstrahlen ausgebildet. Dadurch wird eine Mehrebenenabtastung ermöglicht, der Sensor ist dann ein Mehrebenenscanner.

Der Sensor weist eine Frontscheibe auf, durch die die Lichtstrahlen aus dem Sensor in den Überwachungsbereich beziehungsweise zurück in den Sensor gelangen. Der Sensor ist für eine mitbewegte Frontscheibenüberwachung oder Verschmutzungsmessung ausgebildet, mit der die Lichtdurchlässigkeit der Frontscheibe geprüft wird. Dafür spannen ein Testlichtsender und ein Testlichtempfänger einen Testlichtpfad auf, der über die Frontscheibe verläuft. Testlichtsender und Testlichtempfänger sind mit der Ablenkeinheit mitbewegt, insbesondere darauf angeordnet oder damit drehfest verbunden. Mit einem Testlichtpfad über die Frontscheibe ist ein transmissiver Testlichtpfad durch die Frontscheibe oder ein reflexiver Testlichtpfad mit Reflexion an der Frontscheibe gemeint. Mit einem beispielsweise durch ein Umlenkelement gefalteten Testlichtpfad kann die Frontscheibe sowohl in Transmission als auch in Reflexion geprüft werden.

Eine Steuer- und Auswertungseinheit erfasst für eine eigentliche Messung des Sensors Objekte durch Auswertung des Empfangssignals und bestimmt dazu insbesondere die Lichtlaufzeit und somit den Abstand zu dem jeweiligen angetasteten Objekt. Zudem wertet sie ein Testlichtsignal einer Frontscheibenüberwachungsmessung aus. Das Testlichtsignal erzeugt der Testlichtempfänger aus Testlicht, das der Testlichtsender über den Testlichtpfad zu dem Testlichtempfänger sendet.

Die Erfindung geht von dem Grundgedanken aus, die Frontscheibenüberwachungsmessung ihrerseits auf Funktionsfähigkeit zu prüfen. Dazu wird in mindestens einer Referenzstellung der Ablenkeinheit eine Referenzmessung des Testlichtsignals durchgeführt. In der Referenzstellung ist das Testlichtsignal vorzugsweise von einer möglichen Verschmutzung der Frontscheibe nicht betroffen. Beispielsweise führt in der Referenzstellung der Testlichtpfad gar nicht über die Frontscheibe oder über einen geschützten und darum sauberen Teil der Frontscheibe. Es ist zu beachten, dass ein Sicherheitslaserscanner schon herkömmlich eine Referenzmessung der eigentlichen Messung, insbesondere Lichtlaufzeitmessung, mittels Lichtsender und Lichtempfänger ausführt. Das ist eine unabhängige weitere Referenzmessung, die mit der Frontscheibenüberwachung nichts zu tun hat. Die Referenzstellung für die erfindungsgemäße Referenzmessung und die Stellung der Ablenkeinheit für eine weitere Referenzmessung sind auseinanderzuhalten, beide Stellungen können zusammenfallen, müssen dies aber nicht.

Die Erfindung hat den Vorteil, dass die Transmissionsfähigkeit der Frontscheibe für das Messlicht, also den von dem Lichtsender in den Überwachungsbereich ausgesandten und von dem Lichtempfänger wieder detektierten Lichtstrahl, mit wenig Aufwand gewährleistet werden kann. Dies ist blendungsrobust und mit wenigen Bauteilen realisierbar. Es wird eine kontinuierliche Frontscheibenüberwachung ermöglicht, die nicht wie herkömmlich auf mehrere ortsfeste Testpunkte und entsprechende Testsender-/Testempfängerpärchen angewiesen ist. Dank der Referenzmessung wird eine Degradation der Frontscheibenüberwachung erkannt. Damit ist sichergestellt, dass das Testlichtsignal tatsächlich Auskunft über den Zustand der Frontscheibe gibt. Auf diese Weise lässt sich eine zusätzliche Sicherheit beziehungsweise ein höheres Sicherheitsniveau (SIL, Safety Integrity Level) erzielen.

Der Lichtsender und/oder der Lichtempfänger sind bevorzugt mit der Ablenkeinheit mitbewegt angeordnet. Dadurch entsteht ein beweglicher, insbesondere rotierender Messkopf oder Optikkopf. Alternativ sind Lichtsender und/oder Lichtempfänger stationär und ruhen demnach gegenüber dem Sensor oder dessen Gehäuse, während die Ablenkeinheit beispielsweise als Drehspiegel ausgeführt ist.

Der Sensor weist bevorzugt nur einen Testlichtsender und nur einen Testlichtempfänger auf. Durch die mitbewegte Frontscheibenüberwachung genügt ein einziges Pärchen von Testlichtsender und Testlichtempfänger. Bei zahlreichen der einleitend diskutierten herkömmlichen Ansätze sind hingegen zahlreiche solche Pärchen erforderlich, um die Frontscheibe an hinreichend vielen Testpunkten zu überwachen.

Die Steuer- und Auswertungseinheit ist bevorzugt dafür ausgebildet, das Testlichtsignal mit einem Referenztestlichtsignal oder ein aus dem Testlichtsignal gewonnenes Charakteristikum mit einem Referenzcharakteristikum zu vergleichen. Das Referenztestlichtsignal wird beispielsweise schon während der Herstellung oder bei der Inbetriebnahme eingelernt, oder es wird ein Referenztestlichtsignal aus theoretischen Überlegungen beziehungsweise aus Simulationen vorgegeben. Vorzugsweise genügt es, das Testlichtsignal mit einem Charakteristikum zu bewerten, wofür sich insbesondere dessen Amplitude oder Pegel eignet. Dann findet der Vergleich mit einem Referenzcharakteristikum statt, etwa einem Sollpegel oder einem Toleranzbereich mit einem Mindest- und/oder Höchstpegel. Eine Degradation der Frontscheibenüberwachung wird vorzugsweise in beiden Richtungen aus der Referenzmessung erfasst. Ein stärker werdendes Testlichtsignal ist womöglich sicherheitsrelevant, da es eine Verschmutzung der Frontscheibe kompensieren könnte, die dann für die eigentliche Messung unbemerkt nicht mehr hinreichend lichtdurchlässig ist. Ein sich abschwächendes Testlichtsignal wiederum zeigt eine Verschmutzung der Frontscheibe an, die tatsächlich gar nicht besteht. Das beeinträchtigt die Verfügbarkeit, denn dadurch werden womöglich unnötige Sicherheitsreaktion und damit Stillstände ausgelöst.

Die Steuer- und Auswertungseinheit ist bevorzugt dafür ausgebildet, eine Empfindlichkeit der Frontscheibenüberwachungsmessung anhand der Referenzmessung anzupassen, insbesondere zu regeln. Durch die Referenzmessung aufgedeckte Abweichungen des Testlichtsignals von einer Erwartung oder Anforderung werden durch die Anpassung oder Regelung kompensiert. Die Empfindlichkeit der Frontscheibenüberwachungsmessung lässt sich durch verschiedene Maßnahmen verändern. Dazu zählen die Veränderung der optischen Ausgangsleistung des Testlichtsenders, eine veränderte Verstärkung des von dem Testlichtempfänger erzeugten Testlichtsignals sowie eine entsprechende rechnerische Anpassung des Testlichtsignals oder von dessen Bewertungskriterien während der Auswertung des Testlichtsignals bei der Frontscheibenüberwachungsmessung.

Der Testlichtsender und der Testlichtempfänger weisen bevorzugt in einer Querschnittsebene zu einer Achse, bezüglich derer die Ablenkeinheit sich bewegt, einen Winkelversatz gegenüber der Richtung auf, in die der Lichtsender den Lichtstrahl aussendet. Diese Achse ist bei einer rotierenden Ablenkeinheit deren Drehachse. Durch den Winkelversatz sind die eigentliche Messung, insbesondere Lichtlaufzeitmessung, und die Frontscheibenüberwachung voneinander entkoppelt und können einander nicht durch Streulicht beeinflussen. Der optimale Abstand wird bei einem maximalen Winkelversatz von 180° erreicht.

Testlichtsender und Testlichtempfänger sind bevorzugt einander gegenüberliegend angeordnet. Das ergibt einen direkten Testlichtpfad, bei dem der Testlichtsender über die Frontscheibe zu dem Testlichtempfänger gerichtet ist. Die Frontscheibe liegt bei einem transmissiven Testlichtpfad zwischen Testlichtsender und Testlichtempfänger. Bei einem reflexiven Testlichtpfad ist der Testlichtsender in einem Winkel zu dem Testlichtempfänger gerichtet, damit der Testlichtempfänger nach der Reflexion an der Frontscheibe getroffen wird.

Testlichtsender und Testlichtempfänger sind alternativ nebeneinander mit einem gegenüberliegenden Testlichtreflektor angeordnet. Das ergibt einen durch den Testlichtreflektor gefalteten Testlichtpfad. Der Testlichtpfad kann dabei auf dem Hin- und/oder Rückweg durch die Frontscheibe gehen oder durch Reflexion des Testlichts an der Frontscheibe geknickt werden. Der Testlichtreflektor kann je nach Ausführungsform mit der Ablenkeinheit mitrotieren oder nicht, d.h. stationär in dem Sensor angeordnet sein. Im letzteren Fall sind an mehreren Stellen Testlichtreflektoren anzubringen, insbesondere in Form eines Rings.

Der Testlichtreflektor ist bevorzugt in einem von der Frontscheibe abgegrenzten Innenraum des Sensors angeordnet. Dabei bezeichnet Innenraum einen durch die Frontscheibe beziehungsweise ein Gehäuse des Sensors gegen die Außenwelt geschützten Bereich. Der Testlichtreflektor ist damit den Umgebungsbedingungen nicht ausgesetzt und degradiert nicht oder jedenfalls sehr viel weniger. Vorsichtshalber sei klargestellt, dass Testlichtsender und Testlichtempfänger sich vorzugsweise ebenfalls in diesem Innenraum befinden, zumal deren Mitbewegung ansonsten bereits konstruktiv schwer umsetzbar wäre.

Die Frontscheibe weist bevorzugt zumindest teilweise die Form eines Rotationskörpers und/oder im Schnitt zu einer Mittenachse eine nach innen weisende Kontur auf. Zumindest teilweise bedeutet, dass entsprechend dem Messbereich des Sensors nicht der volle Winkel von 360° umfasst sein muss, sondern möglicherweise nur ein Teilwinkel von beispielsweise 270°. Beispiele für diese Form der Frontscheibe sind ein Kegelstumpf oder ein Kugelausschnitt. Prinzipiell könnte aber von der Rotationssymmetrie abgewichen und eine beispielsweise ellipsoide Form gewählt werden. Ebenso ist für die geneigte Kontur statt eines Geradenstücks wie bei einem Kegel oder eines Kreissegments wie bei einer Kugel beispielsweise eine andere Form und insbesondere eine Freiform denkbar, die der Frontscheibe eine Kelchform oder eine sonstige Geometrie gibt.

Testlichtsender und/oder Testlichtempfänger sind bevorzugt in einem Bereich der Frontscheibe angeordnet, wo diese aufgrund der nach innen weisenden Kontur einen kleinen Radius aufweist. Bei einem direkten Testpfad ist vorzugsweise der Testlichtsender in einem Bereich der Frontscheibe mit kleinem Radius und der Testlichtempfänger gegenüberliegend in einem Bereich der Frontscheibe mit großen Radius angeordnet oder umgekehrt. Bei einem gefalteten Testlichtpfad sind vorzugsweise der Testlichtsender und der Testlichtempfänger in einem Bereich der Frontscheibe mit kleinem Radius und der Testlichtreflektor in einem Bereich der Frontscheibe mit großem Radius angeordnet.

Die Frontscheibe weist bevorzugt einen umlaufenden Sockel auf. Damit wird der aufgrund der nach innen weisenden Kontur kleiner werdende Radius der Frontscheibe rasch wieder nach außen zurückgeführt. Der Testlichtempfänger und der Testlichtsender können unter diesem Sockel angebracht werden. Dadurch liegen sie geschützt im Innenraum des Sensors, und dennoch kann der Testlichtpfad durch den Sockel ins Freie und anschließend über die Frontscheibe geführt werden.

Die Ablenkeinheit weist die Referenzstellung bevorzugt in einem rückwärtigen Totbereich des Sensors auf. Die Referenzstellung wird folglich im Verlauf der Bewegung der Ablenkeinheit dann eingenommen, wenn der Sensor keine eigentliche Messung durchführt oder durchführen kann. Das betrifft insbesondere einen hinteren Totbereich oder Rücklauf des Sensors oder einen komplementären Winkelbereich zu dem Messbereich des Sensors. Beispielsweise umfasst bei einem Messbereich des Sensors von 270° der komplementäre Totbereich 90°, und die Referenzstellung wird innerhalb dieser 90° eingenommen. So wird die Frontscheibe über den gesamten relevanten Messbereich überwacht, die Referenzmessung findet in einer durch den Totbereich ohnehin erzwungenen Messpause und in einem für die eigentliche Messung nicht genutzten Bauraum des Sensors statt.

Der Testlichtpfad verläuft bevorzugt in der Referenzstellung nicht über die Frontscheibe. Während der Referenzmessung wird folglich das Testlicht weder an der Frontscheibe reflektiert, noch durchdringt Testlicht die Frontscheibe. Dadurch ist die Referenzmessung in keiner Weise durch die Frontscheibe beeinträchtigt oder beeinflusst. Alternativ verläuft auch in der Referenzstellung der Testlichtpfad über die Frontscheibe, die jedoch in der Referenzstellung geschützt ist, beispielsweise durch ein Gehäuse. Sie ist dann keiner Verschmutzung ausgesetzt, so dass die Referenzmessung ebenfalls über die Betriebsdauer nicht oder jedenfalls nur wenig beeinträchtigt wird.

Die Frontscheibe weist bevorzugt in einem der Referenzstellung entsprechenden Bereich eine andere Kontur auf, oder in einem der Referenzstellung entsprechenden Bereich ist keine Frontscheibe vorgesehen. Diese Ausgestaltung der Frontscheibe sorgt dafür, dass der Testlichtpfad in der Referenzstellung nicht über die Frontscheibe verläuft. Insbesondere ist die Frontscheibe in der Referenzstellung nicht oder weniger geneigt, so dass der Testlichtpfad sie verfehlt. Denkbar ist auch, dass es in einem der Referenzstellung entsprechenden Bereich überhaupt keine Frontscheibe gibt. Beispielsweise weist der Sensor die Frontscheibe nur über den eigentlichen Messbereich auf, während in einem hinteren Bereich, in dem die Ablenkeinheit die Referenzstellung einnimmt, nur ein Gehäuse ohne Teil der Frontscheibe vorgesehen ist.

Der Testlichtempfänger ist bevorzugt mit seiner optischen Achse mit einer Teilkomponente ins Innere des Sensors beziehungsweise in dessen Gehäuse hinein gerichtet. Eine Teilkomponente bedeutet, dass sich die Ausrichtung weiterhin in erster Linie an dem Testlichtsender beziehungsweise dem Testlichtreflektor orientiert. Damit ist die Ausrichtung weitgehend durch die Frontscheibe vorgegeben. In diesem Rahmen jedoch ist der Testlichtempfänger zudem nach innen gerichtet. Dadurch wird weniger Fremdlicht von außen eingefangen, das die Frontscheibenüberwachungsmessung verfälschen könnte. In diesem Zusammenhang ist auch das Messlicht des Lichtsenders als Fremdlicht aufzufassen. Denkbar ist, dass Messlicht und Testlicht einander spektral beziehungsweise durch Winkelversatz oder unterschiedliche Zeitfenster ausweichen.

Der Sensor ist bevorzugt als Sicherheitssensor, insbesondere Sicherheitslaserscanner, im Sinne einer Sicherheitsnorm für Maschinensicherheit oder berührungslos wirkende Schutzeinrichtungen ausgebildet und weist insbesondere einen Sicherheitsausgang für die Ausgabe eines sicherheitsgerichteten Absicherungssignals auf. Ein Sicherheitssensor oder Sicherheits(laser)scanner ist ein sicherer Sensor beziehungsweise sicherer Laserscanner im Sinne einer Sicherheitsnorm und darf deshalb zum Personenschutz an Gefahrenquellen eingesetzt werden. Für derartige Anwendungen ist eine verbesserte Frontscheibenüberwachung von Vorteil, und die erfindungsgemäße Referenzmessung ermöglicht ein höheres Sicherheitsniveau. Einleitend sind beispielhaft einige heute gültige einschlägige Sicherheitsnormen genannt, die sich regional und zukünftig in ihrer konkreten Formulierung, nicht aber ihrem grundsätzlichen Ansatz der Fehlervermeidung beziehungsweise rechtzeitigen Fehleraufdeckung zur Vermeidung von Unfällen durch Defekte oder sonstiges unerwartetes Verhalten unterscheiden. Wird eine Gefahr erkannt oder kann die eigene Funktionsfähigkeit nicht gewährleistet werden, so wird dies an dem Sicherheitsausgang signalisiert, insbesondere einem OSSD (Output Signal Switching Device). Dieser Sicherheitsausgang ist als Teil der normausfüllenden Maßnahmen sicher, etwa zweikanalig ausgeführt, und dient erforderlichenfalls zur Einleitung einer sicherheitsgerichteten Maßnahme wie einem Notaus oder etwas allgemeiner dem Herstellen eines sicheren Zustands.

Die Steuer- und Auswertungseinheit ist bevorzugt für eine Schutzfeldauswertung ausgebildet, in der bestimmt wird, ob sich ein Objekt in mindestens einem konfigurierten Schutzfeld innerhalb des Überwachungsbereichs befindet. Damit ist eine bewährte Sicherheitsauswertung zur Erkennung von Gefahren bereits in den Sensor integriert, der direkt ein sicherheitsgerichtetes Absicherungssignal für eine Maschine oder eine zwischengeschaltete Sicherheitssteuerung bereitstellt. Die Schutzfelder können im Falle eines Mehrebenenscanners dreidimensional definiert werden. Nicht jeder Schutzfeldeingriff führt zwangsläufig zu einer sicherheitsgerichteten Reaktion, es können noch weitere Prüfungen erfolgen, etwa auf eine Mindestgröße des eingreifenden Objekts, eine Mindestdauer des Eingriffs über mehrere Scans hinweg, und es kann auch im Schutzfeld zulässige Objekte beziehungsweise deaktivierte Teilbereich geben (Muting, Blanking).

Vorzugsweise wird pulsbasiert gemessen, dazu mit dem Lichtstrahl ein Sendepuls ausgesandt und aus dem remittierten Lichtstrahl ein entsprechender Empfangspuls erzeugt.

Die Steuer- und Auswertungseinheit ist bevorzugt dafür ausgebildet, nacheinander mehrere Sendelichtpulse auszusenden, die entsprechenden Empfangspulse mit mindestens einer Schwelle abzutasten und in einem Histogramm zu akkumulieren und die Lichtlaufzeit aus dem Histogramm zu bestimmen. Diese Ausführungsform arbeitet also mit einem Mehrpulsverfahren wie in der einleitend genannten EP 2 469 296 B1.

Die Steuer- und Auswertungseinheit ist bevorzugt dafür ausgebildet, eine sicherheitsgerichtete Reaktion auszulösen, wenn die Lichtdurchlässigkeit der Frontscheibe über eine Toleranz hinaus beeinträchtigt ist oder gemäß der Referenzmessung eine Verlässlichkeit der Frontscheibenüberwachungsmessung nicht gewährleistet ist. Das Erkennen einer unzureichenden Lichtdurchlässigkeit ist ein bevorzugtes Ziel der Frontscheibenüberwachung. Die Referenzmessung ermöglicht es, einen zusätzlichen sicherheitsrelevanten Fehler aufzudecken, nämlich dass die Frontscheibenüberwachung selbst womöglich nicht mehr verlässlich arbeitet. Vorzugsweise wird eine durch die Referenzmessung erkannte Veränderung des Testlichtsignals ausgeglichen. Wenn das aber nicht vorgesehen oder wegen zu starker Degradation nicht mehr verlässlich möglich ist, wird vorzugsweise ebenfalls eine sicherheitsgerichtete Reaktion ausgelöst.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners mit einer mitrotierenden Frontscheibenüberwachung auf einem gefalteten Testlichtpfad;
- Fig. 2: eine schematische Schnittdarstellung gemäß Figur 1 in dessen um 180° verdrehten Winkelstellung;
- Fig. 3: eine schematische Schnittdarstellung eines Laserscanners, bei dem die eigentliche Messung und die Frontscheibenüberwachung einen gegenseitigen Winkelversatz aufweisen;
- Fig. 4: eine schematische Schnittdarstellung eines Laserscanners, dessen Frontscheibe sich nur über einen vorderen Messbereich erstreckt;
- Fig. 5: eine schematische Schnittdarstellung eines Laserscanners mit einem direkten Testlichtpfad für eine mitrotierende Frontscheibenüberwachung;
- Fig. 6: eine schematische Schnittdarstellung gemäß Figur 5 in dessen um 180° verdrehten Winkelstellung; und
- Fig. 7: eine schematische Schnittdarstellung eines Laserscanners mit einer Frontscheibenüberwachung auf einem reflexiven statt transmissiven Testlichtpfad.

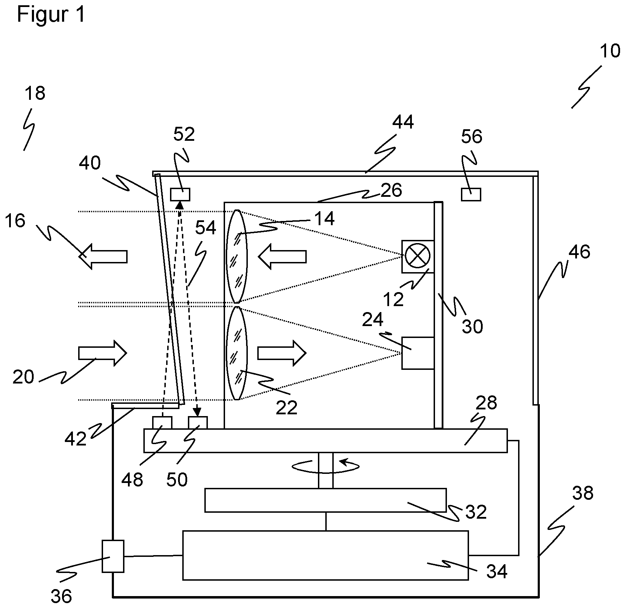

Fig. 1 zeigt eine schematische Schnittdarstellung durch einen Laserscanner 10, der insbesondere als entfernungsmessender Sicherheitslaserscanner ausgebildet ist. Ein Lichtsender 12, etwa ein Laser in Form eines Kantenemitters oder eines VCSELs, sendet ein Lichtsignal beispielsweise in Form von kurzen Lichtimpulsen oder periodisch amplitudenmoduliertem Licht aus. Das Sendelicht wird von einer Sendeoptik 14 zu einem Lichtstrahl 16 kollimiert und in einen Überwachungsbereich 18 ausgesandt. Dort wird der ausgesandte Lichtstrahl 16 von einem gegebenenfalls vorhandenen Objekt remittiert oder reflektiert. Ein Teil dieses Lichts kehrt als einfallender remittierter Lichtstrahl 20 zu dem Laserscanner 10 zurück und wird von einer Empfangsoptik 22 auf einen Lichtempfänger 24 gebündelt, beispielsweise eine Photodiode oder APD (Avalanche Photo Diode).

Lichtsender 12 und Lichtempfänger 24 samt Sendeoptik 14 und Empfangsoptik sind auf einer beweglichen Ablenkeinheit 26 angeordnet, die hier beispielhaft als eine horizontal angeordnete Leiterplatte 28 und eine vertikal angeordnete Leiterplatte 30 dargestellt ist. Die horizontal angeordnete Leiterplatte 28 wird durch den Antrieb eines Motors 32 in eine kontinuierliche Rotationsbewegung versetzt. Auf der vertikal angeordneten Leiterplatte 30 sind Lichtsender 12 und Lichtempfänger 24 angeordnet. Es sind Ausführungsformen mit mehr oder weniger Leiterplatten und anderen Bauelementen der Ablenkeinheit 26 möglich.

Die Ablenkeinheit 26 bildet somit einen beweglichen, insbesondere rotierenden Messkopf. Die jeweilige Winkelstellung der Ablenkeinheit 26 wird über einen nicht dargestellten Encoder erfasst. Der von dem Lichtsender 12 erzeugte Lichtstrahl 16 überstreicht somit den durch die Bewegung erzeugten Überwachungsbereich 18. Wird von dem Lichtempfänger 24 ein remittierter Lichtstrahl 20 aus dem Überwachungsbereich 18 empfangen, so kann aus der Winkelstellung der Ablenkeinheit 26 mittels des Encoders auf die Winkellage des angetasteten Objektes in dem Überwachungsbereich 18 geschlossen werden.

Zusätzlich wird die Lichtlaufzeit von dem Aussenden des Lichtstrahls 16 bis zu dem Empfang des remittierten Lichtstrahls 20 nach Reflexion an dem Objekt in dem Überwachungsbereich 18 ermittelt. Dazu sind alle Lichtlaufzeitverfahren denkbar. Aus der Lichtlaufzeit wird unter Verwendung der Lichtgeschwindigkeit auf die Entfernung des Objektes von dem Laserscanner 10 geschlossen. Diese Auswertung erfolgt in einer Auswertungseinheit 34, die dafür mit dem Lichtsender 12, dem Lichtempfänger 24, dem Motor 32 und dem Encoder verbunden ist. Die Verbindung der Steuer- und Auswertungseinheit 34 zu Elementen auf der Ablenkeinheit 26 ist durch eine einfache Linie dargestellt. Tatsächlich ist hierzu eine Verbindung in ein bewegtes Teil erforderlich, vorzugsweise eine drahtlose Kommunikation. Ebenso werden die Elemente auf der Ablenkeinheit 26 vorzugsweise berührungslos versorgt.

Über den Winkel und die Entfernung stehen dann zweidimensionale Polarkoordinaten aller Objekte in dem Überwachungsbereich 18 zur Verfügung. In dem Überwachungsbereich 18 können somit zweidimensionale Schutzfelder definiert werden, in die unzulässige Objekte wie Bedienpersonen oder deren Körperteile nicht eingreifen dürfen. Erkennt die Auswertungseinheit 34 einen unzulässigen Schutzfeldeingriff, so wird über einen sicheren Ausgang 36 (OSSD, Output Signal Switching Device) ein sicherheitsgerichtetes Abschaltsignal ausgegeben, um beispielsweise eine überwachte gefährliche Maschine anzuhalten oder in eine ungefährliche Position zu verbringen. Alternativ werden über den Ausgang 36 Messdaten ausgegeben, vor allem wenn der Laserscanner 10 kein Sicherheitslaserscanner ist und dementsprechend keine Schutzfelder überwacht.

In einer anderen Ausführungsform erzeugt der Lichtsender 12 nicht nur einen Lichtstrahl 16, sondern eine Vielzahl zueinander beabstandeter Lichtstrahlen in unterschiedliche Elevationswinkel. Dementsprechend empfängt der Lichtempfänger 24 mehrere remittierte Lichtstrahlen 20. Dadurch wird der Laserscanner 10 zu einem Mehrebenenscanner, der nicht nur eine zentrale Ebene, sondern einen Raumausschnitt in mehreren zueinander versetzten Ebenen abtastet.

Alle genannten Funktionskomponenten sind in einem Gehäuse 38 angeordnet, das zumindest im Bereich des Lichtaus- und Lichteintritts eine Frontscheibe 40 aufweist. Die Frontscheibe 40 ist häufig, aber nicht zwingend als Rotationskörper ausgebildet und muss sich auch in beiden Fällen nicht unbedingt über 360° erstrecken, so dass dann ein gewisser Winkelbereich als Totbereich verbleibt. In Figur 1 ist der aktive Messbereich auf der linken Seite und einen Totbereich auf der rechten Seite angeordnet.

Die Frontscheibe 40 weist eine nach innen gerichtete Kontur auf, die im Beispiel der Figur 1 gerade ist. Das führt insgesamt zu der Geometrie eines Kegelstumpfes beziehungsweise eines Winkelausschnitts eines Kegelstumpfes. Kreisförmige Konturen mit einer resultierenden Geometrie der Frontscheibe 40 eines Kugelausschnitts oder sonstige Konturen mit beispielsweise einer kelchförmigen Frontscheibe 40 sind alternativ denkbar. Im unteren Bereich wird die Frontscheibe 40 durch einen Sockel 42 abgeschlossen, der den Radius wieder zurückführt, der sich oberhalb wegen der nach innen gerichteten Kontur verringert. Die Frontscheibe 40 wird durch einen Deckel 44 und eine Rückwand 46 zu einer Haube. In anderen Ausführungsformen sind der obere und rückwärtige Bereich anders ausgestaltet

Unterhalb der Frontscheibe 40 sind ein Testlichtsender 48 und ein Testlichtempfänger 50 und oberhalb der Frontscheibe ein Testlichtreflektor 52 angeordnet. Der Testlichtsender 48 ist eine beliebige Lichtquelle, insbesondere eine LED oder eine Laserdiode, deren Spektrum vorzugsweise zur Vermeidung von Streulicht von dem Lichtsender 12 abweicht, jedoch die Frontscheibe 40 in einem relevanten Wellenlängenbereich auf Transmission testet. Der Testlichtempfänger 50 kann eine einfache Photodiode sein.

Das Testlicht des Testlichtsenders 48 tritt auf einem Testlichtpfad 54 zunächst durch den Sockel 42 ins Freie und durchstrahlt dann die Frontscheibe 40 ins Innere des Laserscanners 10. Dort wird es an dem Testlichtreflektor 52 zu dem Testlichtempfänger 50 reflektiert. Der Testlichtpfad 54 gemäß Figur 1 wird wegen der Umkehr an dem Testlichtreflektor 52 als gefaltet bezeichnet. In Figur 1 befindet sich der Testlichtsender 48 unter dem Sockel 42 und der Testlichtempfänger 50 weiter innen und somit nicht mehr unter dem Sockel 42. Abweichend können Testlichtsender48 wie Testlichtempfänger 50 unter dem Sockel 42 angeordnet sein, der Testlichtpfad 54 durchläuft Sockel 42 und Frontscheibe 40 dann doppelt. Weiterhin können abweichend von der Darstellung die Positionen von Testlichtsender 48 und Testlichtempfänger 50 vertauscht sein. Das hat auch den Vorteil, dass der Testlichtempfänger 50 entsprechend dem Verlauf des Testlichtpfades 54 ein wenig nach innen ausgerichtet werden kann und so weniger Fremdlicht aufnimmt. Die Beeinflussung durch externe Lichtquellen und sonstiges Fremdlicht kann auch durch strahlformende Optiken und Blendenelemente von Testlichtsender48 beziehungsweise Testlichtempfänger 50 verringert werden.

Anhand des Testlichtsignals des Testlichtempfängers 50 kann die Auswertungseinheit 34 beispielsweise durch Vergleich mit einem Sollpegel prüfen, ob die Frontscheibe 40 an den Durchstoßpunkten des Testlichtpfades 40 in ihrer Lichtdurchlässigkeit beeinträchtigt ist. Dadurch wird ein Test auf Verschmutzung oder die Anwesenheit von Abschattungsobjekten auf der Frontscheibe 40 möglich. In einem Sicherheitslaserscanner wird bei Erkennung einer Beeinträchtigung, welche die sichere Funktion nicht mehr gewährleistet, eine sicherheitsgerichtete Abschaltung ausgelöst. Ein nicht in der Sicherheitstechnik eingesetzter Sensor könnte beispielsweise stattdessen auch nur eine Wartungsaufforderung anzeigen.

Der Testlichtsender 48 und der Testlichtempfänger 50 vollziehen die Bewegung der Ablenkeinheit 26 mit. Somit wird die Frontscheibe 40 nicht nur punktuell, sondern im Verlauf der Bewegung der Ablenkeinheit 26 über ihren ganzen Umfang auf ihre Transmissionseigenschaften überwacht. Der Testlichtreflektor 52 hingegen befindet sich nicht auf der Ablenkeinheit 26 und ist daher stationär, d.h. bezüglich des Laserscanners 10 beziehungsweise dessen Gehäuses 38 ortsfest. Um eine Frontscheibenüberwachung in mehreren oder allen Stellungen der Ablenkeinheit 26 zu ermöglichen, sind mehrere über den Umfang verteilte Testlichtreflektoren 52 oder ein beispielsweise ringförmiger umlaufender Testlichtreflektor 52 vorgesehen. Im rückwärtigen Bereich auf der rechten Seite der Figur 1 wird der dort befindliche Testlichtreflektor für eine noch zu erläuternde Referenzmessung verwendet und kann deshalb als Referenztestlichtreflektor 56 bezeichnet werden. Es genügt ein einziges Pärchen aus Testlichtsender 48 und Testlichtempfänger 50, um den gesamten relevanten Bereich der Frontscheibe 40 zu prüfen. Der zugehörige Testlichtreflektor 52 ist im Innenraum des Laserscanners 10 untergebracht und somit vor Umwelteinflüssen geschützt.

Der Laserscanner 10 gemäß Figur 1 hat eine biaxiale Anordnung, in welcher der ausgesandte Lichtstrahl 16 neben dem einfallenden remittierten Lichtstrahl 20 verläuft. Das ist aber nur beispielhaft zu verstehen. Es sind auch Laserscanner in einer koaxialen Anordnung bekannt, also mit gemeinsamer optischer Achse von Lichtsender 12 und Lichtempfänger 24. Die Darstellung in Figur 1 ist noch in vielerlei anderer Hinsicht rein schematisch und beispielhaft zur Erläuterung des Funktionsprinzips. Es sind viele Varianten von periodisch abtastenden Sensoren oder Laserscannern bekannt. Beispielsweise kann die Gestaltung von Sendeoptik 14 und Empfangsoptik 22 variiert werden, etwa über einen strahlformenden Spiegel, eine andere Anordnung der Linsen oder zusätzliche Linsen. In der Ausführungsform nach Figur 1 liegen Lichtsender 12 und Lichtempfänger 24 vorzugsweise sehr nahe beieinander, um im Nahbereich ein ausreichendes Empfangssignal zu erhalten, und sind auf einer gemeinsamen Leiterkarte 30 untergebracht. Auch das ist nur ein Beispiel, denn es können eigene Leiterkarten sowie andere Anordnungen beispielsweise mit mehr Abstand oder einem gegenseitigen Höhenversatz vorgesehen sein. Eine erfindungsgemäße Überwachung der Frontscheibe 40 ist auch in jedem anderen Aufbau eines entsprechenden optoelektronischen Sensors mit periodisch bewegter Ablenkeinheit 26 möglich.

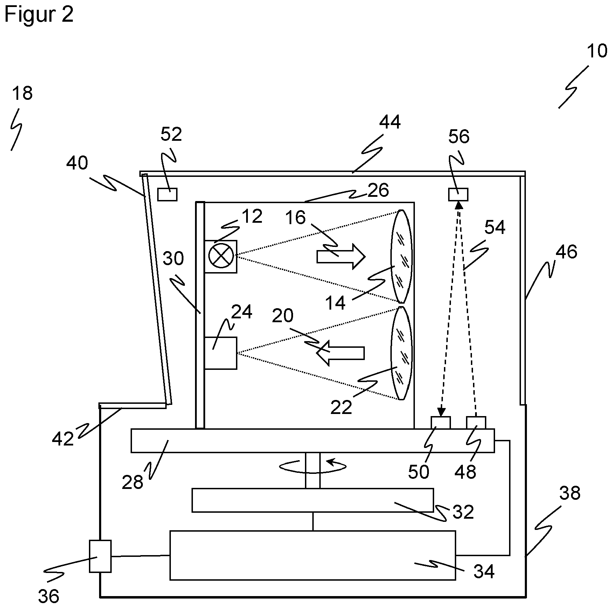

Figur 2 zeigt den Laserscanner 10 der Figur 1 in einer um 180° verdrehten Winkelstellung der Ablenkeinheit 26. In diesem rückwärtigen Bereich wird vorzugsweise der Überwachungsbereich 18 nicht abgetastet, es ist eine Totzone der eigentlichen Messung, in der keine Lichtlaufzeiten mit den Lichtstrahlen 16, 20 gemessen werden. Der ausgesandte Lichtstrahl 16 verlässt den Laserscanner 10 vorzugsweise gar nicht erst durch die Rückwand 46, die eine entsprechende Beschichtung oder intransparente Materialwahl aufweisen kann.

Mindestens die eine dargestellte Winkelstellung der Ablenkeinheit 26 in dem rückwärtigen Bereich ist eine Referenzstellung für eine Referenzmessung oder einen Selbsttest der Frontscheibenüberwachung. Das sollte nicht mit einer Referenzmessung für die eigentliche Messung verwechselt werden, mit der die Lichtlaufzeitmessung mit den Lichtstrahlen 16, 20 überprüft wird und die beispielsweise in der einleitend genannten DE 43 45 446 C2 erläutert wird. Eine derartige Referenzmessung der eigentlichen Messung ist vorzugsweise ebenfalls vorgesehen, das entsprechende Referenzziel ist jedoch nicht dargestellt und nicht an der Frontscheibenüberwachung beteiligt.

Vielmehr wird durch die erfindungsgemäße Referenzmessung das Testlichtsignal geprüft, das der Testlichtempfänger 50 aus von dem Testlichtsender 48 empfangenem Testlicht erzeugt. Während der Referenzmessung verläuft der Testlichtpfad 54 nicht über die Frontscheibe 40. Die Frontscheibe 40 liegt außerhalb des Testlichtpfades 54 von dem Testlichtsender 48 über den Referenztestlichtreflektor 56 zu dem Testlichtempfänger 50. Dazu ist in der Ausführungsform gemäß Figur 1 und 2 die Rückwand 46 der Frontscheibe 40 weniger oder gar nicht nach innen geneigt. Im gezeigten Beispiel verläuft sie gerade und senkrecht, somit im Raum betrachtet wie ein Ausschnitt eines Zylindermantels. Die veränderte Neigung führt zu einem Versatz der Rückwand 46 gegenüber dem Testlichtpfad 54, der somit keinen Teil der Frontscheibe 40 mehr trifft. Die sonst erwünschte Schrägstellung der Frontscheibe 40 gegenüber dem ausgesandten Lichtstrahl 16 ist nicht erforderlich, da ohnehin in der Referenzstellung keine eigentliche Messung von Objekten in dem Überwachungsbereich 18 erfolgt. Es sei daran erinnert, dass der Referenztestlichtreflektor 56 nur wegen dessen Funktion während der Referenzmessung so benannt ist, tatsächlich kann es sich um einen Teil eines umlaufenden Testlichtreflektors 52 handeln.

Das in der Referenzstellung empfangene Testlichtsignal kann gegen einen erwarteten Pegelbereich geprüft und die Frontscheibenüberwachung als nicht verlässlich eingestuft werden, wenn das Testlichtsignal vor diesem Maßstab zu schwach oder zu stark ist. Vorzugsweise wird jedoch die Abweichung nicht einfach festgestellt, sondern ausgeglichen, insbesondere die Frontscheibenüberwachung anhand der Referenzmessung nachgeregelt. Dazu kann die Empfindlichkeit angepasst werden, beispielsweise durch Veränderung der optischen Ausgangsleistung des Testlichtsenders 48 oder eines Verstärkungsfaktors für das Testlichtsignal des Testlichtempfängers 50. Eine andere Möglichkeit ist, das Testlichtsignal während der Frontscheibenüberwachung anhand der Referenzmessung anzupassen beziehungsweise zu normieren. Die Frontscheibenüberwachung wird erst dann als nicht verlässlich eingestuft, wenn eine angleichende Anpassung oder ein Nachregeln nicht mehr möglich ist. Kann die Funktion der Frontscheibenüberwachung nicht garantiert werden, so wird vorzugsweise eine sicherheitsgerichtete Reaktion ausgelöst, da die Möglichkeit besteht, dass die Frontscheibenüberwachung eine zu stark beeinträchtigte Frontscheibe 40 nicht mehr erkennt. Dank der Referenzmessung wird somit das mögliche Sicherheitsniveau des Laserscanners 10 angehoben, so dass beispielsweise SIL2 (Safety Integrity Level) erreichbar ist.

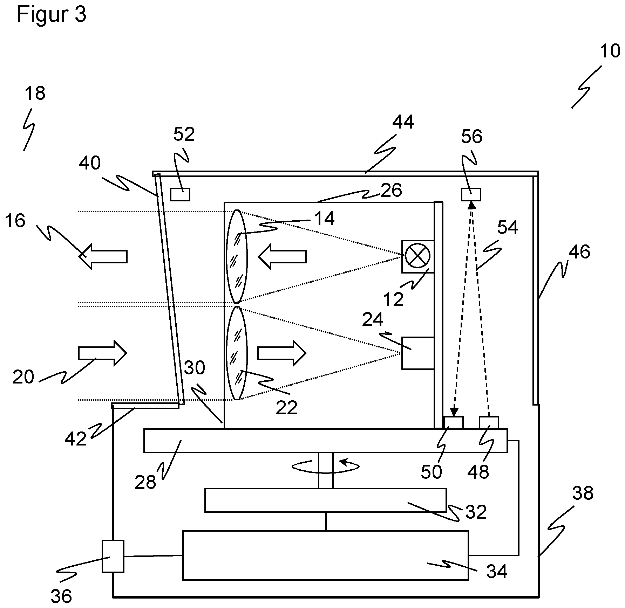

Figur 3 zeigt eine weitere Ausführungsform des Laserscanners 10. Im Unterschied zu den Figuren 1 und 2 weisen hier Testlichtsender 48 und Testlichtempfänger 50 einen Winkelversatz zur Scanrichtung auf, also der Richtung, in die der Lichtsender 12 den Lichtstrahl 16 aussendet, beziehungsweise aus der der Lichtempfänger 24 den remittierten Lichtstrahl 20 empfängt. Dies führt dazu, dass die Frontscheibenüberwachung und die eigentliche Messung einander aus dem Weg gehen und insbesondere ein optisches Übersprechen vermieden wird. Der minimale Zeitversatz einer halben Umdrehung der Ablenkeinheit 26 muss natürlich in der Ansteuerung beachtet werden, oder wenn es darum geht, eine Verschmutzung womöglich in ihrem Winkel zu lokalisieren. Für die Funktionsfähigkeit spielt das keine Rolle, da Verschmutzung ein vergleichsweise langsamer Prozess ist und sie jedenfalls innerhalb jeder geforderten Ansprechzeit aufgedeckt würde. Der Winkelversatz beträgt in Figur 3 die maximal möglichen 180°. Ein kleinerer Winkelversatz ist ebenso denkbar. Ein entsprechender Winkelversatz kann mit allen schon beschriebenen und folgenden Ausführungsformen kombiniert werden.

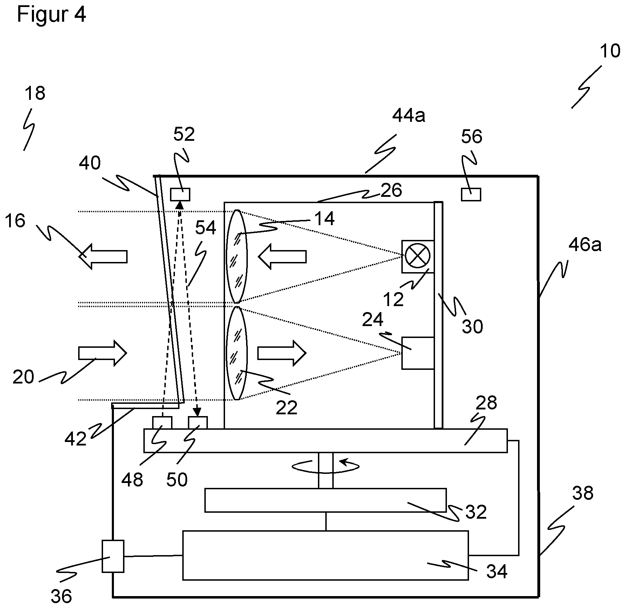

Figur 4 zeigt eine weitere Ausführungsform des Laserscanners 10. Im Gegensatz zu der Ausführungsform gemäß den Figuren 1 und 2 ist hier eine Frontscheibe 40 nur im Bereich der aktiven Messzone verbaut. Der Deckel 44a und die Rückwand 46a sind nun Teil des Gehäuses 38. Als weitere Ausführungsform könnte die Rückwand 46a noch Teil der Frontscheibe 40 und nur der Deckel 44a als Gehäuseteil ausgebildet sein. Diese Varianten sind im Übrigen auch für die weiteren noch zu beschreibenden Ausführungsformen denkbar.

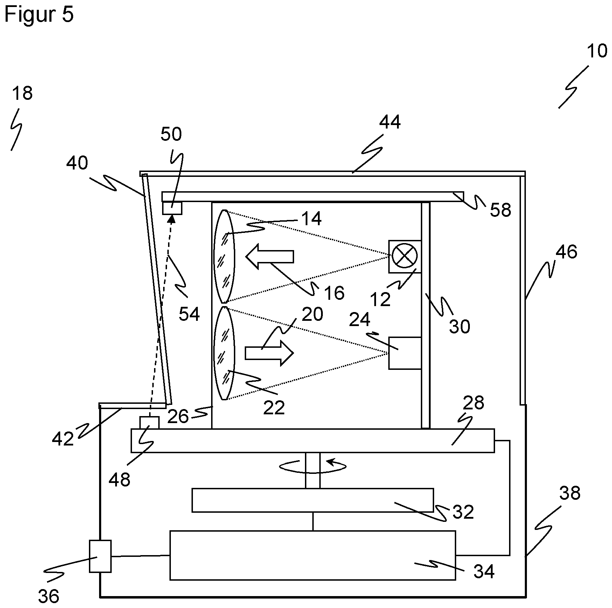

Figur 5 zeigt eine weitere Ausführungsform des Laserscanners 10. Statt eines über den Testlichtreflektor 52 gefalteten Testlichtpfads 54 wird hier ein direkter Testlichtpfad 54 von dem Testlichtsender 48 durch die Frontscheibe 40 zu dem gegenüber angeordneten Testlichtempfänger 50 aufgespannt. Damit sich der Testlichtempfänger 50 weiterhin mit der Ablenkeinheit 26 mitbewegt, ist ein entsprechender Träger erforderlich, der im Beispiel der Figur 5 als zusätzliche mitbewegte Leiterkarte 58 ausgebildet ist. Testlichtsender 48 und Testlichtempfänger 50 können ihre Positionen vertauschen, mit dem Testlichtsender 48 oben und dem Testlichtempfänger 50 unten.

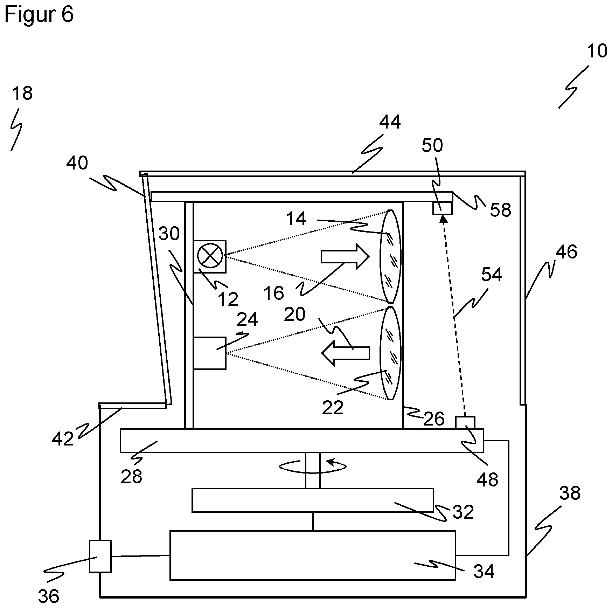

Figur 6 zeigt den Laserscanner 10 gemäß Figur 5 in einer um 180° verdrehten Winkelstellung der Ablenkeinheit 26, also in der Referenzstellung. Durch die andere Formgebung der Frontscheibe 40 im Bereich der Rückwand 46, nämlich ohne Neigung oder mit weniger Neigung, verläuft hier der Testlichtpfad 54 nicht mehr durch die Frontscheibe 40. In einem mit dem Testlichtpfad 54 mitbewegten Bezugssystem bewegt sich die Frontscheibe im dargestellten rückwärtigen Bereich sozusagen aus dem Testlichtpfad 54 heraus und ermöglicht so in der Referenzstellung die Referenzmessung ohne Beeinflussung durch die Frontscheibe 40.

Mit einem zusätzlichen mitbewegten Träger, beispielsweise der mitbewegten Leiterkarte 58, können auch Ausführungsformen mit einem gefalteten Testlichtpfad 54 gemäß den Figuren 1 bis 3 so modifiziert werden, dass sich der Testlichtreflektor 52 mitbewegt. Dadurch, dass dann im oberen Teil der Ablenkeinheit 26 eine Mitbewegung ermöglicht ist, entsteht auch die Möglichkeit, die Positionen von Testlichtsender 48 und Testlichtempfänger 50 mit derjenigen des Testlichtreflektors 52 zu vertauschen. Der dann in den Darstellungen unten angeordnete Testlichtreflektor 52 wird je nach Ausführungsform mit der Ablenkeinheit 26 mitbewegt oder bleibt bezüglich des Laserscanners 10 beziehungsweise dessen Gehäuses 38 stationär.

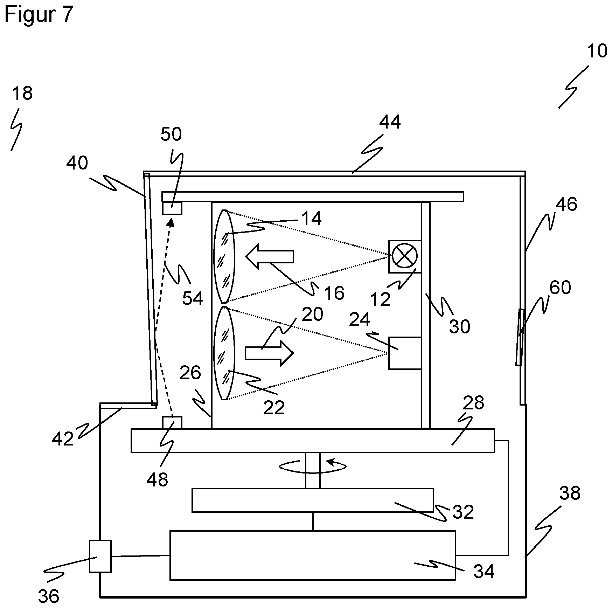

Figur 7 zeigt eine weitere Ausführungsform des Laserscanners 10, der nun einen reflexiven Testlichtpfad 54 anstelle des bisherigen transmissiven Testlichtpfads 54 verwendet. Die Frontscheibe 40 wird somit nicht durchstrahlt, sondern nur angestrahlt. Auch daraus lassen sich Rückschlüsse auf den Verschmutzungszustand und die Lichtdurchlässigkeit der Frontscheibe 40 ziehen. Da die Frontscheibe 40 meine geneigte Kontur aufweist, würde in der nicht mehr eigens gezeigten Referenzstellung bei um 180° verdrehter Ablenkeinheit 26 möglicherweise der Testlichtempfänger 50 verfehlt. Zum Ausgleich kann für die Referenzstellung der Ablenkeinheit 26 ein zusätzliches Umlenkelement 60 mit ausgleichender Kontur beziehungsweise Neigung vorgesehen sein.

Die gezeigte Ausführungsform mit einem reflexiven Testlichtpfad 54 kann mit den bisher vorgestellten Ausführungsformen kombiniert werden, insbesondere mit einem Testlichtreflektor 52 und/oder mit einer Rückwand 46, die Teil des Gehäuses 38 statt der Frontscheibe 40 ist. Durch zusätzliche Umlenkelemente kann ein Testlichtpfad 54 sowohl reflexiv als auch transmissiv sein, d.h. die Frontscheibe 40 nacheinander sowohl durchstrahlen als auch von ihr reflektiert werden.

## Patentansprüche

1. Optoelektronischer Sensor (10), insbesondere Laserscanner, zur Erfassung von Objekten in einem Überwachungsbereich (18), der
einen Lichtsender (12) zum Aussenden mindestens eines Lichtstrahls (16),
eine bewegliche Ablenkeinheit (26) zur periodischen Abtastung des Überwachungsbereichs (18) mit dem mindestens einen Lichtstrahl (16),
einen Lichtempfänger (24) zum Erzeugen eines Empfangssignals aus dem von den Objekten remittierten Lichtstrahl (20),
eine Frontscheibe (40),
einen mit der Ablenkeinheit (26) mitbewegten Testlichtsender (48) und einen mit der Ablenkeinheit (26) mitbewegten Testlichtempfänger (50), die einen Testlichtpfad (54) aufspannen, der über die Frontscheibe (40) verläuft,
und eine Steuer- und Auswertungseinheit (34) aufweist, die dafür ausgebildet ist, aus dem Empfangssignal Informationen über die Objekte in dem Überwachungsbereich (18) zu gewinnen, insbesondere einen Abstand mittels eines Lichtlaufzeitverfahrens zu messen, sowie in einer Frontscheibenüberwachungsmessung eine beeinträchtigte Lichtdurchlässigkeit der Frontscheibe (40) aus einem Testlichtsignal zu erkennen, das der Testlichtempfänger (50) aus über den Testlichtpfad (54) von dem Testlichtsender (48) empfangenem Testlicht erzeugt,
**dadurch gekennzeichnet,**
**dass** die Steuer- und Auswertungseinheit (34) weiterhin für eine Referenzmessung des Testlichtsignals in mindestens einer Referenzstellung der Ablenkeinheit (26) ausgebildet ist.

2. Sensor (10) nach Anspruch 1,
wobei der Lichtsender (12) und/oder der Lichtempfänger (24) mit der Ablenkeinheit (26) mitbewegt angeordnet sind und/oder der nur einen Testlichtsender (48) und nur einen Testlichtempfänger (50) aufweist.

3. Sensor (10) nach einem der vorhergehenden Ansprüche,
wobei die Steuer- und Auswertungseinheit (34) dafür ausgebildet ist, das Testlichtsignal mit einem Referenztestlichtsignal oder ein aus dem Testlichtsignal gewonnenes Charakteristikum mit einem Referenzcharakteristikum zu vergleichen.

4. Sensor (10) nach einem der vorhergehenden Ansprüche,
wobei die Steuer- und Auswertungseinheit (34) dafür ausgebildet ist, eine Empfindlichkeit der Frontscheibenüberwachungsmessung anhand der Referenzmessung anzupassen, insbesondere zu regeln.

5. Sensor (10) nach einem der vorhergehenden Ansprüche,
wobei der Testlichtsender (48) und der Testlichtempfänger (50) in einer Querschnittsebene zu einer Achse, bezüglich derer die Ablenkeinheit (26) sich bewegt, einen Winkelversatz gegenüber der Richtung aufweisen, in die der Lichtsender (12) den Lichtstrahl aussendet, insbesondere einen Winkelversatz von 180°.

6. Sensor (10) nach einem der vorhergehenden Ansprüche,
wobei Testlichtsender (48) und Testlichtempfänger (50) einander gegenüberliegend angeordnet sind.

7. Sensor (10) nach einem der Ansprüche 1 bis 5,
wobei Testlichtsender (48) und Testlichtempfänger (50) nebeneinander mit einem gegenüberliegenden Testlichtreflektor (52) angeordnet sind.

8. Sensor (10) nach Anspruch 7,
wobei der Testlichtreflektor (52) in einem von der Frontscheibe (40) abgegrenzten Innenraum des Sensors (10) angeordnet ist.

9. Sensor (10) nach einem der vorhergehenden Ansprüche,
wobei die Frontscheibe (40) zumindest teilweise die Form eines Rotationskörpers und/oder im Schnitt zu einer Mittenachse eine nach innen weisende Kontur aufweist, wobei insbesondere der Testlichtsender (48) und/oder der Testlichtempfänger (50) in einem Bereich der Frontscheibe (40) angeordnet sind, wo diese aufgrund der nach innen weisenden Kontur einen kleinen Radius aufweist.

10. Sensor (10) nach einem der vorhergehenden Ansprüche,
wobei die Ablenkeinheit (26) die Referenzstellung in einem rückwärtigen Totbereich des Sensors (10) aufweist und/oder wobei der Testlichtpfad (54) in der Referenzstellung nicht über die Frontscheibe (40) verläuft.

11. Sensor (10) nach einem der vorhergehenden Ansprüche,
wobei die Frontscheibe (40, 46) in einem der Referenzstellung entsprechenden Bereich (46) eine andere Kontur aufweist oder in einem der Referenzstellung entsprechenden Bereich keine Frontscheibe (40, 46) vorgesehen ist.

12. Sensor (10) nach einem der vorhergehenden Ansprüche,
wobei der Testlichtempfänger (50) mit seiner optischen Achse mit einer Teilkomponente ins Innere des Sensors (10) gerichtet ist.

13. Sensor (10) nach einem der vorhergehenden Ansprüche,
der als Sicherheitssensor, insbesondere Sicherheitslaserscanner, im Sinne einer Sicherheitsnorm für Maschinensicherheit oder berührungslos wirkende Schutzeinrichtungen ausgebildet ist und insbesondere einen Sicherheitsausgang (36) für die Ausgabe eines sicherheitsgerichteten Absicherungssignals aufweist, wobei insbesondere die Steuer- und Auswertungseinheit (34) für eine Schutzfeldauswertung ausgebildet ist, in der bestimmt wird, ob sich ein Objekt in mindestens einem konfigurierten Schutzfeld innerhalb des Überwachungsbereichs (18) befindet.

14. Sensor (10) nach einem der vorhergehenden Ansprüche,
wobei die Steuer- und Auswertungseinheit (34) dafür ausgebildet ist, eine sicherheitsgerichtete Reaktion auszulösen, wenn die Lichtdurchlässigkeit der Frontscheibe (40) über eine Toleranz hinaus beeinträchtigt ist oder gemäß der Referenzmessung eine Verlässlichkeit der Frontscheibenüberwachungsmessung nicht gewährleistet ist.

15. Verfahren zur Überwachung einer Frontscheibe (40) eines optoelektronischer Sensors (10), insbesondere eines Sensors (10) nach einem der vorhergehenden Ansprüche, mit einer beweglichen Ablenkeinheit (26) zur periodischen Abtastung mit einem Lichtstrahl (16), wobei Testlicht auf mindestens einem Testlichtpfad (54) über die Frontscheibe (40) von einem mit der Ablenkeinheit (26) mitbewegten Testlichtsender (48) ausgesandt und in einem mit der Ablenkeinheit (26) mitbewegten Testlichtempfänger (50) in ein Testlichtsignal umgewandelt wird und eine beeinträchtigte Lichtdurchlässigkeit der Frontscheibe (40) aus dem Testlichtsignal erkannt wird,
**dadurch gekennzeichnet,**
**dass** in mindestens einer Referenzstellung der Ablenkeinheit (26) eine Referenzmessung des Testlichtsignals durchgeführt wird.
